# EUROPÄISCHE PATENTSCHRIFT

(11) **EP 0 516 997 B1**
(45) Veröffentlichungstag und Bekanntmachung des Hinweises auf die Patenterteilung: **18.01.1995**
(21) Anmeldenummer: 92107759.0
(22) Anmeldetag: 08.05.1992
(51) Int. Cl.: F16H 61/38, F16H 9/18

(54) **Stufenlos regelbares Keilriemenumschlingungsgetriebe**
Continuously variable V-belt transmission
Variateur continu de vitesse à courroie trapézoidale

(30) Priorität: 03.06.1991 DE 4118094
(43) Veröffentlichungstag der Anmeldung: 09.12.1992
(73) Patentinhaber: Volkswagen Aktiengesellschaft, 38436 Wolfsburg (DE)
(72) Erfinder: Wahnschaffe, Nikolaus, Dipl.-Ing., W-3180 Wolfsburg 27 (DE); Ruth, Andreas, W-3300 Braunschweig (DE)

(56) Entgegenhaltungen:
- DE-A- 2 044 794
- DE-A- 2 650 950
- DE-B- 1 550 920
- FR-A- 2 462 623
- GB-A- 2 018 915
- US-A- 3 401 582
- US-A- 4 229 989
- PATENT ABSTRACTS OF JAPAN vol. 10, no. 29 (M-451)(2086) 5. Februar 1986 , & JP-A-60 184 756
- DE-A(B) 2 913 574
- DE-B 2 626 329

## Beschreibung

Die Erfindung betrifft ein stufenlos regelbares Keilriemenumschlingungsgetriebe der im Oberbegriff des Patentanspruchs 1 genannten Art, wie es beispielsweise aus der DE-A 29 13 574 bekannt ist.

Ständig steigende Komfortansprüche haben dazu geführt, daß die Zahl der vom Fahrzeugmotor anzutreibenden Nebenaggregate in modernen Personenkraftfahrzeugen ständig zugenommen hat und wohl auch in Zukunft noch steigen wird. Die wichtigsten Nebenaggregate sind z. B. die obligatorische Lichtmaschine, der Klimakompressor einer Klimaanlage oder die Lenkhilfepumpe einer hydraulischen Servolenkeinrichtung.

Ein direkter Antrieb dieser Nebenaggregate durch den Fahrmotor mittels Riemen-, Ketten- und/oder Zahnradanordnungen o. ä. ist wegen der dadurch bedingten starren Drehzahlbeziehung zwischen Fahrmotor und Nebenaggregaten mit dem Nachteil verbunden, daß diese Nebenaggregate während des Fahrbetriebes mit sehr unterschiedlichen Drehzahlen angetrieben werden, entsprechend dem betriebsmäßig sehr großen Drehzahlbereich des Fahrmotors.

Ein Antrieb der Nebenaggregate mit so unterschiedlich großen Drehzahlen ist aus den verschiedensten Gründen problematisch und unbefriedigend. Bei einigen Nebenaggregaten erfordert eine große Variationsbreite der Betriebsdrehzahl für die einwandfreie Funktionsweise vergleichsweise aufwendiger Steuersysteme.

Bei Lichtmaschinen könnte es einerseits während des Betriebes mit sehr niedriger Drehzahl - z. B. im Leerlauf des Fahrmotors - dazu kommen, daß sie zu wenig Strom liefert, andererseits bedeutet eine betrieblich hohe Maximaldrehzahl hohe Verlustleistungen, höhere Geräuschemissionen, vergleichsweise hohe Anforderungen an die Lager und wegen der entsprechend hohen Berstdrehzahl eine vergleichsweise schwere Bauweise der Lichtmaschine.

Ähnliche Probleme gibt es für den Betrieb von Klimakompressoren oder hydraulischen Lenkhilfepumpen.

Es ist aus diesem Grunde bekannt, derartige Nebenaggregate nicht einfach durch Riemen-, Ketten oder Zahnradanordnungen starr mit dem Fahrmotor zu koppeln, d. h. mit einem festen Drehzahlverhältnis zu betreiben, sondern unter Zwischenschaltung eines stufenlos regelbaren Keilriemenumschlingungsgetriebes (z. B. DE-B 26 26 329, DE-A 29 13 574), um die Nebenaggregate so unabhängig von der innerhalb eines sehr großen Drehzahlbereichs variablen Drehzahl des Fahrmotors in einem für sie günstigeren Drehzahlbereich mit möglichst konstanter Drehzahl zu betreiben.

Vor diesem Hintergrund liegt der Erfindung die Aufgabe zugrunde, ein stufenlos regelbares Keilriemenumschlingungsgetriebe der im Oberbegriff des Patentanspruchs 1 genannten Art zu schaffen, welches dem Konstrukteur die Möglichkeit bietet, es mit einfachen konstruktiven Maßnahmen auf die mitunter sehr unterschiedlichen Bedürfnisse der jeweilig anzutreibenden Nebenaggregate anzupassen, z. B. eine belastungs- und antriebsdrehzahlunabhängige Abtriebsdrehzahl oder aber z. B. eine zwar antriebsdrehzahlunabhängige, aber belastungsabhängige Abtriebsdrehzahl zu erzeugen.

Diese Aufgabe wird erfindungsgemäß durch die Merkmale des Patentanspruchs 1 gelöst.

Vorteilhafte Ausgestaltungen und Weiterbildungen der Erfindung sind in den Unteransprüchen angegeben.

Anhand eines in der Zeichnung dargestellten Ausführungsbeispieles wird die Erfindung nachstehend näher erläutert.

In der Zeichnung zeigen
- Fig. 1: eine Schnittdarstellung eines erfindungsgemäßen stufenlos regelbaren Keilriemenumschlingungsgetriebes und
- Fig. 2: die Ansicht eines Elements der hierbei eingesetzten Anpreßvorrichtung mit axial wirkenden Rampenanordnungen.

Das erfindungsgemäße Keilriemenumschlingungsgetriebe 1 enthält in üblicher Weise eine aus zwei Scheibenhälften 5, 6 bestehende antriebsseitige Keilriemenscheibe 2 und eine ebenfalls aus zwei Scheibenhälften 7, 8 bestehende abtriebsseitige Keilriemenscheibe 3, welche über einen drehmomentenübertragenden Keilriemen 4 miteinander verbunden sind.

Die beiden Scheibenhälften 5, 6 bzw. 7, 8 der beiden Keilriemenscheiben 2, 3 sind jeweils axial relativ zueinander verschiebbar, so daß die Breite des zwischen ihnen gebildeten Spaltes veränderbar ist, und zwar stufenlos.

Jeweils eine der beiden Scheibenhälften, nämlich die Scheibenhälfte 5 bzw. 7 ist hierbei in üblicher Weise als axial feststehende Scheibenhälfte ausgebildet; der Abstand zwischen den beiden Scheibenhälften wird also jeweils ausschließlich durch axiales Verschieben der zweiten Scheibenhälfte, nämlich der Scheibenhälfte 6 bzw. 8 variiert.

Im dargestellten Ausführungsbeispiel sind die beiden Scheibenhälften 5, 6 der antriebsseitigen Keilriemenscheibe 2 maximal auseinandergefahren, d. h. diese Keilriemenscheibe ist vollständig "geöffnet", während die beiden Scheibenhälften 7, 8 der abtriebsseitigen Keilriemenscheibe 3 vollständig zusammengefahren sind, diese Keilriemenscheibe also vollständig "geschlossen" ist.
Der die beiden Keilriemenscheiben miteinander verbindende Keilriemen 4 läuft demzufolge einerseits auf dem minimalen Wirkdurchmesser der antriebsseitigen Keilriemenscheibe 2 und andererseits auf dem maximalen Wirkdurchmesser der abtriebsseitigen Keilriemenscheibe 3. Bei dieser Konstellation liegt die maximal mögliche Untersetzung des Keilriemenumschlingungsgetriebes 1 vor; die maximal mögliche Übersetzung des Umschlingungsgetriebes liegt dagegen vor, wenn die beiden Scheibenhälften der antriebsseitigen Keilriemenscheibe 2 vollständig zusammengefahren und die beiden Scheibenhälften 7, 8 der abtriebsseitigen Keilriemenscheibe 3 maximal auseinandergefahren sind.

Die verschiebbaren Scheibenhälften 6, 8 der beiden Keilriemenscheiben 2, 3 sind jeweils auf einem axialen Hülsenfortsatz 18 bzw. 19 der zugehörigen axial festen Scheibenhälfte 5 bzw. 7 axial verschiebbar, jedoch mittels einer Keilverzahnung 26 drehfest gelagert. Die axialen Hülsenfortsätze 18, 19 sind ihrerseits jeweils axial fest, aber drehbeweglich mit einem antreibenden bzw. mit einem angetriebenen Bauelement, nämlich einer Antriebswelle 16 bzw. einer Abtriebswelle 17 verbunden. Anstelle einer Keilverzahnung sind natürlich auch andere gebräuchliche drehmomentenschlüssige Verbindungen denkbar.

Die Scheibenhälften der beiden Keilriemenscheiben 2, 3 sind beim regelnden Auseinander- bzw. Zusammenfahren also keiner Relativverdrehung unterworfen, was sich sowohl für die Funktionsweise als auch für die Lebensdauer positiv auswirkt. Eine Relativverdrehung der zusammenwirkenden Scheibenhälften während der Verstellvorgänge würde bedeuten, daß hierbei zwangsläufig ein gewisser Schlupf zwischen dem Keilriemen 4 einerseits und den Scheibenhälften der beiden Keilriemenscheiben 2, 3 andererseits auftritt, was zu Lasten des Wirkungsgrades sowie der Lebenserwartung ginge.

Zur Drehmomentenübertragung von der Antriebswelle 16 auf die antriebsseitige Keilriemenscheibe 2 einerseits und von der abtriebsseitigen Keilriemenscheibe 3 auf die Abtriebswelle 17 andererseits sind Anpreßvorrichtungen 9 mit axial wirkenden Rampenanordnungen vorgesehen, von welchen die jeweiligen Scheibenhälften 5, 6 bzw. 7, 8 axial zusammendrückende drehmomentenabhängige Kräfte erzeugt werden.

Diese Anpreßvorrichtungen 9 sind jeweils zwischen den axial verschiebbaren Scheibenhälften 6 bzw. 8 und der Antriebswelle 16 bzw. Abtriebswelle 17 angeordnet. Sie enthalten jeweils ein mit der axial verschiebbaren Scheibenhälfte 6 bzw. 8 drehfest verbundenes erstes Element und ein damit axialkrafterzeugend zusammenwirkendes zweites Element, welches seinerseits jeweils mit der Antriebswelle 16 bzw. mit der Abtriebswelle 17 drehfest verbunden ist.

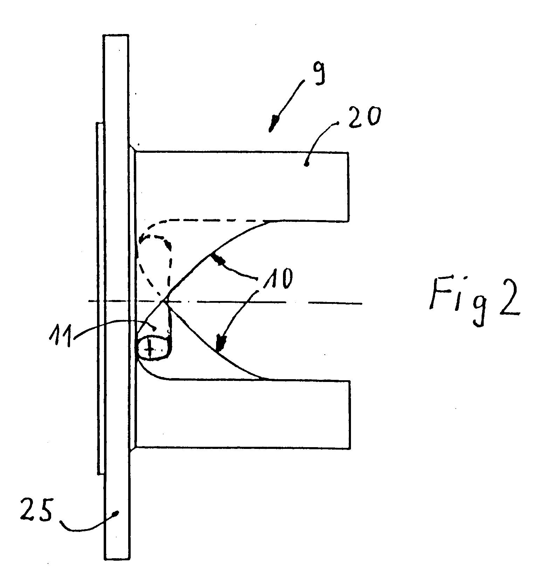

Im dargestellten Ausführungsbeispiel besteht dieses erste Element jeweils aus einem drehfesten hülsenähnlichen axialen Fortsatz 20 der axial verschiebbaren Scheibenhälfte 6 bzw. 8, in oder an dem axial wirkende Rampenanordnungen 10 (Fig. 2) angeordnet sind.

Im Ausführungsbeispiel ist dieses erste Element nicht integraler Bestandteil der axial verschiebbaren Scheibenhälfte, sondern ein eigenständiges Bauelement, das an dieser Scheibenhälfte angeschraubt oder in ähnlicher Weise befestigt ist.

In Fig. 2 ist ein Ausführungsbeispiel der Anpreßvorrichtung 9 prinzipienhaft dargestellt. Man erkennt, daß der hülsenähnliche axiale Fortsatz 20 einen Flansch 25 zur Anschraubung an die zugeordnete axial verschiebbare Scheibenhälfte 6 bzw. 8 trägt, sowie axial wirkende Rampenanordnungen 10, d. h. nockenähnliche Kurvenbahnen, die als Führungsbahnen für das mit der Antriebs- bzw. der Abtriebswelle 16 bzw. 17 drehfest verbundene zweite Element der Anpreßvorrichtung 9 dient, das im Ausführungsbeispiel als radial ausgerichtete Bolzenanordnung 11 bzw. 11′, 11˝ ausgebildet ist. Abweichend vom in Fig. 2 dargestellten Ausführungsbeispiel können die axial wirkenden Rampenanordnungen natürlich auch in Form von Nuten o. ä. ausgebildet sein.

Von Vorteil ist es, die Bolzenanordnungen 11 und 11′, 11˝ jeweils mit reibungsmindernden Paßhülsen 21 auszustatten, die auf den Führungsbahnen der Rampenanordnungen 10 abwälzen.

Im dargestellten Ausführungsbeispiel besteht die radial ausgerichtete Bolzenanordnung der antriebsseitigen Anpreßvorrichtung 9 aus einem in die Antriebswelle 16 eingepreßten durchgehenden Bolzen 11 und die entsprechende Bolzenanordnung der abtriebsseitigen Anpreßvorrichtung 9 aus zwei in die hülsenförmig ausgebildete Abtriebswelle 17 eingelassenen Bolzen 11′ und 11˝. Die beiden freien Enden des in die Antriebswelle 16 eingepreßten Bolzens 11 durchgreifen dabei in Umfangsrichtung verlaufende Langlöcher 27 im axialen Hülsenfortsatz 18 der antriebsseitigen festen Scheibenhälfte 5.

Die Drehmomentenübertragung von der Antriebswelle 16 auf die antriebsseitige Keilriemenscheibe 2 erfolgt über den Bolzen 11 der Anpreßvorrichtung 9. Dieser überträgt das gelieferte Drehmoment nämlich über den hülsenähnlichen axialen Fortsatz 20 der Anpreßvorrichtung 9 unmittelbar auf die damit verschraubte verschiebbare Scheibenhälfte 6 und mittelbar, nämlich über die Keilverzahnung 26, auf die axial feste Scheibenhälfte 5, so daß die eine Hälfte des Drehmoments von der verschiebbaren Scheibenhälfte und die andere Hälfte von der axial feststehenden Scheibenhälfte 5 auf den Keilriemen 4 übertragen wird.

Durch die axial wirkenden Rampenanordnungen 10 im axialen Fortsatz 20 der Anpreßvorrichtung 9 wird dabei eine dem Übertragungsmoment proportionale Axialkraft erzeugt, weiche bestrebt ist, die verschiebbar gelagerte Scheibenhälfte 6 axial gegen die feststehende Scheibenhälfte 5 zu drücken.

Von der Momentenübertragung her ist die Abtriebsseite des Keilriemenumschlingungsgetriebes 1 analog zur Antriebsseite aufgebaut, nur verläuft der Kraftfluß auf dieser Seite vom Keilriemen 4 zur Welle hin und nicht umgekehrt.

Das übertragene Drehmoment wird vom Keilriemen 4 hälftig auf die beiden Scheibenhälften 7, 8 und sodann über die axial wirkende Rampenanordnung des hülsenähnlichen axialen Fortsatzes 20 der axial verschiebbaren Scheibenhälfte 8 auf die beiden radial ausgerichteten Bolzen 11′, 11˝ und damit auf die Abtriebswelle 17 übertragen. Auch hierbei wird durch die axial wirkenden Rampenanordnungen eine dem übertragenen Moment proportionale axial gerichtete Reaktionskraft erzeugt, welche bestrebt ist, die axial verschiebbare Scheibenhälfte 8 axial gegen die feststehende Scheibenhälfte 7 zu drücken.

Es ist leicht erkennbar, daß den von den Rampenanordnungen 10 erzeugten, die jeweiligen Scheibenhälften 5, 6 bzw. 7, 8 zusammendrückenden Axialkräften vom Keilriemen 4 ausgeübte, die jeweiligen Scheibenhälften auseinanderdrückende Axialkräfte entgegenwirken. Durch entsprechende Bemessung der Steigung der Rampenanordnungen 10 der Anpreßvorrichtung kann dafür gesorgt werden, daß die durch die Rampenanordnungen erzeugten Axialkräfte und die durch den Keilriemen 4 in den Scheibenhälften erzeugten gegensinnigen Axialkräfte immer gleich groß sind, so daß das Übersetzungsverhältnis des Keilriemenumschlingungsgetriebes praktisch lastunabhängig, d. h. unabhängig vom übertragenen Drehmoment bleibt. Es kann aber auch von Vorteil sein, die Führungsbahnen der Rampenanordnungen 10 bezüglich ihres Steigungsverlaufs derart auszubilden, daß sich für das Übersetzungsverhältnis eine gewisse Lastabhängigkeit ergibt, beispielsweise derart, daß erst dann, wenn den von der abtriebsseitigen Keilriemenscheibe 3 angetriebenen Nebenaggregaten, z. B. einem Generator 29 Leistung abgefordert wird, eine gewisse Vergrößerung des bis dahin vorherrschenden Übersetzungsverhältnisses stattfindet.

Im dargestellten Ausführungsbeispiel ist auf der einen Seite der abtriebsseitigen Keilriemenscheibe 3 ein Generator 29, d. h. eine Lichtmaschine o. ä. und auf der anderen Seite eine Keilrippenscheibe 30, z. B. zum Antrieb eines Klimakompressors und/oder einer Lenkhilfepumpe o. ä. an die Abtriebswelle 17 angeflanscht. Sowohl die Momentenübertragung auf die Lichtmaschine 29 als auch die Momentenübertragung auf die Keilrippenscheibe 30 erfolgt also über die axial wirkende Rampenanordnung der abtriebsseitigen Anpreßvorrichtung 9, wobei Laständerungen kompensierende Axialkräfte erzeugt werden.

Grundsätzlich wäre es auch denkbar, die Keilrippenscheibe 30 statt an der Abtriebswelle 17 unmittelbar an einem Flansch 31 der axial festen Scheibenhälfte 7 der abtriebsseitigen Keilriemenscheibe 3 zu befestigen, was allerdings gravierende funktionelle Auswirkungen hätte. Die unmittelbare Befestigung der Keilrippenscheibe 30 an der Scheibenhälfte 7 würde bewirken, daß das über den Keilriemen 4 übertragene entsprechende Teilmoment nicht mehr über die Rampenanordnung der Anpreßvorrichtung 9, sondern direkt von dieser Scheibenhälfte 7 auf die Keilrippenscheibe 30 übertragen wird, so daß bezüglich dieses Momentenanteils von der Anpreßvorrichtung 9 keine entsprechende kompensierende Axialkraft erzeugt wird. Auf die beiden Scheibenhälften 7, 8 würde demnach nur eine entsprechend kleinere sie zusammenpressene Axialkraft wirksam sein, nämlich entsprechend dem Anteil des über die Rampenanordnung auf den Generator 29 übertragenen Moments.

Da andererseits auf der Antriebsseite des Keilriemenumschlingungsgetriebes weiterhin das gesamte Moment über die Rampenanordnungen der antriebsseitigen Anpreßvorrichtung 9 übertragen würde, wirkte auf die dortigen Scheibenhälften eine entsprechend größere sie zusammenpressende Axialkraft. Eine Änderung der Leistungsanforderung an der Keilrippenscheibe 30 hätte also jeweils eine Übersetzungsänderung des Keilriemengetriebes zur Folge, weil die damit einhergehende Momentenänderung lediglich an der antriebsseitigen Keilriemenscheibe 2, nicht aber an der abtriebsseitigen Keilriemenscheibe 3 eine entsprechende Änderung der auf die jeweiligen Scheibenhälften einwirkenden Axialkräfte zur Folge hätte. Bei einer Vergrößerung der Leistungsanforderung an der Keilrippenscheibe 30 träte z. B. quasi ein Defizit an Axialkraft auf der Abtriebsseite auf. Dieses abtriebsseitige Defizit an Axialkraft führte dazu, daß die vom Keilriemen 4 auf die abtriebsseitigen Scheibenhälften 7, 8 wirkenden Kräfte diese weiter auseinanderdrücken könnten und der Keilriemen dadurch tiefer zwischen die beiden Scheibenhälften, d. h. auf einen geringeren Wirkdurchmesser wandern würde. Gleichzeitig gelänge der Keilriemen auf der antriebsseitigen Keilriemenscheibe 2 weiter nach außen auf einen größeren Wirkdurchmesser; das Übersetzungsverhältnis des Keilriemenumschlingungsgetriebes würde dadurch vergrößert, so daß die Drehzahl aller angetriebenen Nebenaggregate entsprechend erhöht würde.

Um die Drehzahl der Abtriebswelle 17, d. h. die Drehzahl der von ihr angetriebenen Nebenaggregate unabhängig von der innerhalb eines bestimmten Drehzahlbereiches veränderbaren Drehzahl der Antriebswelle 16 im wesentlichen konstant zu halten, ist auf der Antriebsseite des Keilriemenumschlingungsgetriebes 1 eine Fliehkraftvorrichtung 12 angeordnet, welche eine zwischen den beiden Scheibenhälften 5, 6 der antriebsseitigen Keilriemenscheibe 2 wirksame Axialkraft erzeugt, die der von der antriebsseitigen Anpreßvorrichtung 9 erzeugten Axialkraft entgegengerichtet ist und mit zunehmender Drehzahl größer wird. Durch diese drehzahlabhängige Gegen-Axialkraft werden so die Scheibenhälften 5, 6 der antriebsseitigen Keilriemenscheibe 2 mit zunehmender Drehzahl weiter auseinandergedrückt, so daß der Keilriemen 4 mit zunehmender Drehzahl antriebsseitig immer tiefer zwischen die beiden Scheibenhälften 5, 6 auf einen immer kleineren Wirkdurchmesser wandert und als Folge dieses antriebsseitigen Nachinnenwanderns abtriebsseitig immer weiter nach außen auf einen immer größeren Wirkdurchmesser gelangt. Auf diese Weise wird das Übersetzungsverhältnis des Keilriemenumschlingungsgetriebes selbsttätig drehzahlabhängig so verändert, daß die Drehzahl der Abtriebswelle 17 in etwa konstant bleibt.

Damit die axial verschiebbare Scheibenhälfte 6 jeweils unter der Einwirkung einer bestimmten drehzahlabhängigen Gegen-Axialkraft eine bestimmte axiale Position relativ zur festen Scheibenhälfte 5 einnimmt, ist antriebsseitig noch eine vorgespannte Federvorrichtung 15 angeordnet, welche - der drehzahl- bzw. fliehkraftabhängigen Gegen-Axialkraft entgegenwirkend - auf die beiden Scheibenhälften 5, 6 eine wegabhängige Anpreßkraft ausübt. Gleichzeitig sichert diese vorgespannte Federvorrichtung 15 bei stillstehender Antriebswelle 16, wenn also weder von den axial wirkenden Anpreßvorrichtungen 9 noch von der Fliehkraftvorrichtung 12 auf die Scheibenhälften wirkende Axialkräfte erzeugt werden, eine gewisse Mindestspannung des Keilriemens 4.

Bei Stillstand der Antriebswelle 16 ist nämlich die antriebsseitige Keilriemenscheibe 2 unter der Wirkung der vorgespannten Federvorrichtung 15 "vollständig geschlossen", d. h. die beiden Scheibenhälften 5, 6 sind vollständig zusammengefahren, so daß der Keilriemen antriebsseitig ganz außen, d. h. auf dem größten Wirkdurchmesser liegt. Die abtriebsseitige Keilriemenscheibe 3 befindet sich dagegen während dieser Zeit - da keine zusammenpressenden Axialkräfte wirksam sind - in ihrem "vollständig geöffneten" Zustand, d. h. die beiden Scheibenhälften 7, 8 sind maximal auseinandergefahren, so daß der Keilriemen 4 abtriebsseitig ganz innen, d. h. auf dem kleinsten Wirkdurchmesser liegt. Diese bei Stillstand des Keilriemenumschlingungsgetriebes vorliegende Konstellation stellt die Ausgangssituation des Keilriemenumschlingungsgetriebes bei geringen betriebsmäßigen Eingangsdrehzahlen dar, wie sie z. B. bei einem von einer Verbrennungskraftmaschine, z. B. von deren Kurbelwelle angetriebenen Keilriemenumschlingungsgetriebe vorliegen, wenn und solange die Verbrennungskraftmaschine mit sehr niedriger Drehzahl, z. B. mit ihrer Leerlaufdrehzahl betrieben wird.

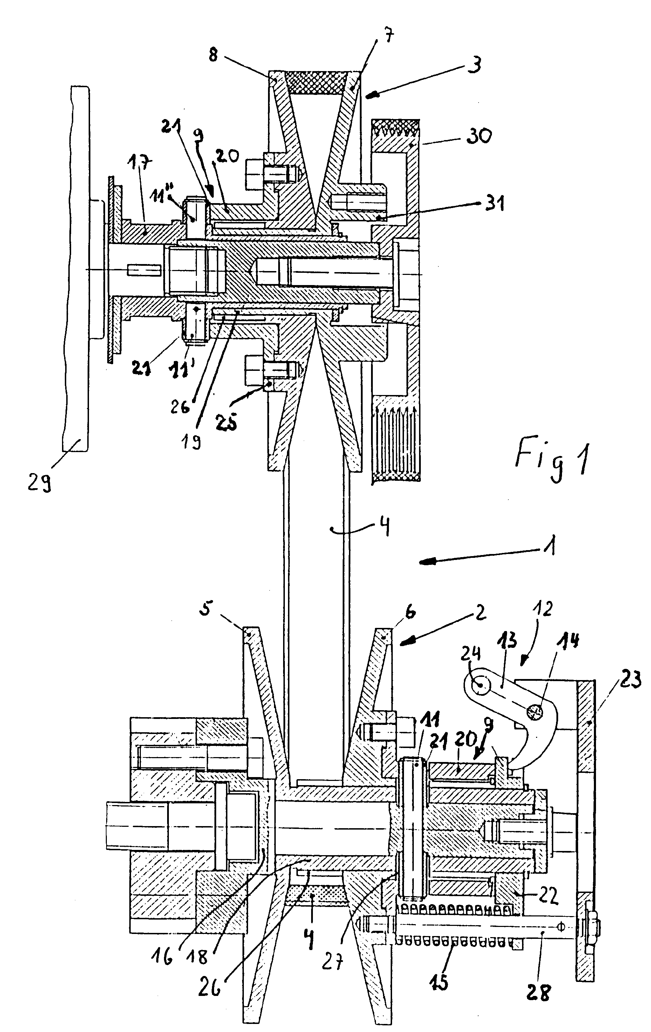

Mit steigender Eingangsdrehzahl wandert der Keilriemen 4 dann aufgrund der von der Fliehkraftvorrichtung 12 auf die beiden Scheibenhälften 5, 6 ausgeübten drehzahlabhängig wachsenden axialen Spreizkräfte auf der antriebsseitigen Keilriemenscheibe 2 auf einen immer kleiner werdenden Wirkdurchmesser, bis er sich bei der betrieblichen Höchstdrehzahl - wie in Fig. 1 dargestellt - antriebsseitig auf dem kleinstmöglichen und abtriebsseitig auf dem größtmöglichen Wirkdurchmesser befindet.

Im dargestellten Ausführungsbeispiel trägt das freie Ende des axialen Hülsenfortsatzes 18 der antriebsseitigen festen Scheibenhälfte 5 einen durch Sicherungsringe o. ä. axial fixierten Umfangsflansch 22, an dem sich einerseits die als Druckfeder ausgebildete vorgespannte Federvorrichtung 15 und andererseits das eine Ende eines um eine Drehachse 14 schwenkbaren zweiarmigen Hebels 13 der Fliehkraftvorrichtung 12 abstützen. In Fig. 1 ist jeweils nur eine Druckfeder 15 und ein zweiarmiger Hebel 13 erkennbar, doch sind vorteilhafterweise entlang dem Umfang des axialen Hülsenfortsatzes 18 gleichmäßig jeweils mehrere, z. B. drei solche Federvorrichtungen 15 und zweiarmige Hebel 13 verteilt angeordnet. Die Federvorrichtungen 15 sind dabei jeweils auf einem einenends an der axial verschiebbaren Scheibenhälfte 6 befestigten und andererseits mit Spiel durch den axial fixierten Umfangsflansch 22 hindurchgreifenden Führungsbolzen 28 gelagert, der im Ausführungsbeispiel gleichzeitig auch dazu dient, die antriebsseitige Anpreßvorrichtung 9 mit ihrem Flansch 25 an dieser Scheibenhälfte 6 anzuschrauben.

An den freien Enden der durch den Umfangsflansch 22 hindurchgeführten Führungsbolzen 28 ist eine hier im wesentlichen ringplattenförmig ausgebildete Haltevorrichtung 23 befestigt, welche die jeweils etwa in Umfangsrichtung ausgerichteten Lagerbolzen 14 der schwenkbaren zweiarmigen Hebel 13 trägt.

Im dargestellten Ausführungsbeispiel trägt der freie Hebelarm des zweiarmigen Hebels 13 jeweils ein besonderes Fliehgewicht 24, was den Vorteil hat, daß durch einfaches Variieren dieses Gewichts das Drehzahlverhalten des Keilriemenumschlingungsgetriebes optimiert werden kann. Abweichend davon ist es aber natürlich auch denkbar, diesen freien Hebelarm selbst als Fliehgewicht auszubilden.

Das erfindungsgemäße stufenlos regelbare Keilriemenumschlingungsgetriebe zeichnet sich nicht nur durch einen vergleichsweise einfachen und kompakten Aufbau sowie durch eine hohe Lebensdauer aus, sondern auch durch die Möglichkeit, mit konstruktiv einfachen Maßnahmen auf sein lastabhängiges und/oder drehzahlabhängiges Verhalten Einfluß zu nehmen, z. B. durch Variation der Kontur der Rampenanordnungen 10 der antriebs- und abtriebsseitigen Anpreßvorrichtungen 9, durch Variation der Federkennungen der vorgespannten Federvorrichtungen 15 und/oder durch Variation der Fliehgewichte 24 der Fliehkraftvorrichtungen 12.

Ohne das Keilriemenumschlingungsgetriebe 1 als solches konstruktiv zu verändern, können die Konturen der Rampenanordnungen 10 z. B. durch einfaches Austauschen der an die axial verschieblichen Scheibenhälften 6 bzw. 8 anschraubbaren Anpreßvorrichtungen 9 vorgenommen werden und die Variation der Federkennungen durch einfaches Austauschen der Federvorrichtungen 15 auf den Führungsbolzen 28.

## Patentansprüche

1. Stufenlos regelbares Keilriemenumschlingungsgetriebe mit
a) zwei durch einen Keilriemen (4) drehmomentenübertragend miteinander gekoppelten Keilriemenscheiben (2, 3), die jeweils eine axial feste und eine axial begrenzt verschiebbare Scheibenhälfte (5, 6; 7, 8) besitzen und die jeweils mit einem antreibenden und einem angetriebenen Bauelement (Antriebswelle 16 bzw. Abtriebswelle 17) trieblich verbunden sind,
b) Anpreßvorrichtungen (9) mit axial wirkenden Rampenanordnungen (10) zur drehmomentenabhängigen Erzeugung von die jeweiligen Scheibenhälften (5, 6; 7, 8) der Keilriemenscheiben (2, 3) axial zusammendrückenden Kräften,
c) einer der antriebsseitigen Keilriemenscheibe (2) zugeordneten Fliehkraftvorrichtung (12) zur Erzeugung einer zwischen deren beiden Scheibenhälften (5, 6) wirksamen Axialkraft, die der von der zugehörigen Anpreßvorrichtung (9) erzeugten Axialkraft entgegengerichtet ist, sowie
d) mindestens einer die Scheibenhälften einer der beiden Keilriemenscheiben mit einer axialen Anpreßkraft beaufschlagenden vorgespannten Federvorrichtung (15),
gekennzeichnet durch folgende Merkmale:
e) die jeweilige axial verschiebbare Scheibenhälfte (6 bzw. 8) ist drehfest auf jeweils einem axialen Hülsenfortsatz (18 bzw. 19) der zugehörigen axial festen Scheibenhälfte (5 bzw. 7) gelagert, die ihrerseits jeweils axial fest, aber drehbeweglich mit der antreibs- bzw. mit der Antriebswelle verbunden ist,
f) die Anpreßvorrichtungen (9) enthalten jeweils mit den axial verschiebbaren Scheibenhälften (6 bzw. 8) drehfest verbundene erste Elemente (10) und damit axialkrafterzeugend zusammenwirkende zweite Elemente (11 bzw. 11′, 11˝), die ihrerseits jeweils mit der Antriebs- bzw. mit der Abtriebswelle bzw. mit drehfest verbunden sind,
g) die mindestens eine vorgespannte Federvorrichtung (15) ist der antriebsseitigen Keilriemenscheibe (2) zugeordnet.

2. Keilriemenumschlingungsgetriebe nach Anspruch 1, dadurch gekennzeichnet, daß die zweiten Elemente der Anpreßvorrichtungen (9) jeweils eine mit mit der Antreibs- bzw. mit der Abtriebswelle drehfest verbundene radial ausgerichtete Bolzenanordnung (11;11′, 11˝) enthalten, welche mit der jeweiligen von der axial verschiebbaren Scheibenhälfte (6, 8) getragenen axial wirkenden und als erste Elemente dienenden Rampenanordnung (10) in einer drehmomentenübertragenden Linienberührung steht.

3. Keilriemenumschlingungsgetriebe nach Anspruch 2, dadurch gekennzeichnet, daß die Rampenanordnungen (10) jeweils in oder an drehfesten hülsenähnlichen axialen Fortsätzen (20) der jeweiligen axial verschiebbaren Scheibenhälften (6, 8) angeordnet sind.

4. Keilriemenumschlingungsgetriebe nach Anspruch 2 oder 3, dadurch gekennzeichnet, daß die Bolzenanordnungen (11; 11′, 11˝) mit reibungsmindernden Paßhülsen (21) ausgestattet sind, die auf Führungsbahnen der Rampenanordnungen (10) abwälzen.

5. Keilriemenumschlingungsgetriebe nach einem der Ansprüche 1 bis 4, dadurch gekennzeichnet, daß das freie Ende des axialen Hülsenfortsatzes (18) der antriebsseitigen festen Scheibenhälfte (5) einen als Druckplatte dienenden axial fixierten Umfangsflansch (22) trägt, an dem einerseits die Federvorrichtung (15) und andererseits die Fliehkraftvorrichtung (12) angreifen.

6. Keilriemenumschlingungsgetriebe nach Anspruch 5, gekennzeichnet durch mehrere, vorzugsweise drei, gleichmäßig über dem Umfang des Hülsenfortsatzes (18) verteilt angeordnete Federvorrichtungen (15), die jeweils auf einem mit einem Ende an der axial verschiebbaren Scheibenhälfte (6) befestigten und mit seinem freien Ende mit Spiel duch Umfangsflansch (22) hindurchgreifenden Führungsbolzen (28) gelagert sind.

7. Keilriemenumschlingungsgetriebe nach Anspruch 6, dadurch gekennzeichnet, daß die freien Enden der Führungsbolzen (28) eine Haltevorrichtung (23) tragen, die der Lagerung der Fliehkraftvorrichtung (12) dient.

8. Keilriemenumschlingungsgetriebe nach Anspruch 7, dadurch gekennzeichnet, daß die Fliehkraftvorrichtung (12) mehrere, vorzugsweise drei gleichmäßig über den Umfang des Umfangsflansches (22) verteilt angeordnete zweiarmige Hebel (13) enthält, die jeweils um einen in der Haltevorrichtung (23) gelagerten, etwa in Umfangsrichtung weisenden Lagerbolzen (14) schwenkbar gelagert sind und mit ihrem einen Hebelarm am Umfangsflansch (22) anliegen, während ihr freier anderer Hebelarm ein Fliehgewicht (24) trägt oder selbst als ein solches ausgebildet ist.

9. Keilriemenumschlingungsgetriebe nach einem der Ansprüche 1 bis 8, dadurch gekennzeichnet, daß die axial wirkenden Rampenanordnungen (10) der Anpreßvorrichtungen (9) jeweils eine über die Rampenlänge variable oder eine zumindest annähernd konstante Steigung aufweisen.

10. Keilriemenumschlingungsgetriebe nach einem der Ansprüche 1 bis 9, dadurch gekennzeichnet, daß die Federvorrichtungen (15) eine im wesentlichen lineare oder eine progressiv ansteigende Kennung aufweisen.

## Claims

1. Continuously adjustable V-belt transmission having
a) two V-belt pulleys (2,3) which are coupled together and which transmit a rotational movement by virtue of a V-belt (4) and which V-belt pulleys respectively comprise a pulley half which is axially fixed and a pulley half which has limited axial movement (5, 6; 7,8) and which V-belt pulleys are operatively connected respectively to a drive component and a driven component (drive shaft 16 and a driven shaft 17),
b) press-down devices (9) having axially effective ramp arrangements (10) for the purpose of producing, in dependence upon the rotational movement, forces which axially compress the respective pulley halves (5, 6; 7,8) of the V-belt pulleys (2, 3),
c) a centrifugal device (12), allocated to the drive-side V-belt pulley (2), for the purpose of producing an axial force which is effective between the two pulley halves (5, 6) and which axial force is directed against the axial force produced by the associated press-down device (9), and
d) at least one pre-stressed resilient device (15) which exerts an axial press-down force on the pulley halves of one of the two V-belt pulleys,
characterised by the following features:
e) the respective axially displaceable pulley half (6 and 8) is non-rotatably mounted respectively on an axial sleeve extension (18 and 19) of the associated axially fixed pulley half (5 and 7), which for its part is connected respectively to the drive shaft and the driven shaft in such a manner that it is able to rotate but is axially fixed,
f) the press-down devices (9) comprise first members (10) which are non-rotatably connected respectively to the axially displaceable pulley halves (6 and 8) and second members (11 and 11′, 11˝) which cooperate therewith producing axial forces, which elements for their part are non-rotatably connected respectively to the drive shaft and to the driven shaft,
g) the at least one pre-stressed resilient device (15) is allocated to the drive-side V-belt pulley (2).

2. V-belt transmission according to claim 1, characterised in that the second members of the press-down devices (9) comprise respectively a radially aligned pin arrangement (11; 11′, 11˝) which is non-rotatably connected to the drive shaft and the driven shaft, which pin arrangement is in linear contact, in such a manner as to transmit the rotational movement, with the respective ramp arrangements which are axially effective and serve as the first members and are supported by the axially displaceable pulley halves (6, 8).

3. V-belt transmission according to claim 2, characterised in that the ramp arrangements (10) are disposed respectively in or at the non-rotatable sleeve-type axial extensions (20) of the respective axially displaceable pulley halves (6, 8).

4. V-belt transmission according to claim 2 or 3, characterised in that the pin arrangements (11; 11′, 11˝) are equipped with friction-reducing fitting-sleeves (21) which roll off on guideways of the ramp arrangements (10).

5. V-belt transmission according to any one of claims 1 to 4, characterised in that the free end of the axial sleeve extension (18) of the drive-side fixed pulley half (5) supports an axially fixed peripheral flange (22) which serves as a pressure plate and which is engaged on the one side by the resilient device (15) and on the other side by the centrifugal device (12).

6. V-belt transmission according to claim 5, characterised by a plurality, preferably three, of resilient devices (15) disposed uniformly over the periphery of the sleeve extension (18), which resilient devices are mounted respectively on a guide pin (28) which is attached with one end to the axially displaceable pulley half (6) and protrudes with clearance with its free end through the peripheral flange (22).

7. V-belt transmission according to claim 6, characterised that the free ends of the guide pins (28) support a retaining device (23) which serves to mount the centrifugal device(12).

8. V-belt transmission according to claim 7, characterised in that the centrifugal device (12) comprises a plurality, preferably three, of two-arm levers (13) disposed uniformly over the periphery of the peripheral flange (22), which levers are pivotably mounted in each case about a bearing pin (14) which is directed in the peripheral direction and is mounted in the retaining device (23), and which levers rest with one lever arm against the peripheral flange (22) whilst their free other lever arm supports a centrifugal weight (24) or is even designed as such.

9. V-belt transmission according to any one of claims 1 to 8, characterised in that the axially effective ramp arrangements (10) of the press-down devices (9) respectively comprise an incline which is variable over the length of the ramp or at least almost constant.

10. V-belt transmission according to any one of claims 1 to 9, characterised in that the resilient devices (15) have a characteristic curve which is substantially linear or has a progressive incline.

## Revendications

1. Variateur de vitesse à courroie trapézoïdale à réglage continu comprenant :
a) deux poulies à courroie trapézoïdale (2, 3) qui sont reliées l'une à l'autre par une courroie trapézoïdale (4) en transmettant un couple de rotation, qui possèdent chacune une demi-poulie fixe axialement et une demi-poulie à mouvement axial limité (5, 6 ; 7, 8) et qui sont reliées chacune de manière motrice à un élément menant et à un élément mené (arbre d'entraînement 16 et, respectivement, arbre de sortie 17),
b) des dispositifs de pression (9) comportant des agencements formant rampes à effet axial (10) pour produire, en fonction du couple de rotation, des forces rapprochant axialement les demi-poulies (5, 6 ; 7, 8) des poulies à courroie trapézoïdale (2, 3),
c) un dispositif à force centrifuge (12) associé à la poulie à courroie trapézoïdale (2) située côté entraînement et destiné à produire une force axiale qui agit entre les deux demi-poulies (5, 6) et qui est opposée à la force axiale produite par le dispositif de pression associé (9), et
d) au moins un dispositif à ressort précontraint (15) qui sollicite les demi-poulies d'une des deux poulies à courroie trapézoïdale avec une force de pression axiale, caractérisé en ce que :
e) chaque demi-poulie à mouvement axial (6 et, respectivement, 8) est liée en rotation à un prolongement axial formant manchon (18 et, respectivement, 19) de la demi-poulie correspondante fixe axialement (5 et, respectivement, 7) qui, pour sa part, est reliée de manière fixe dans le sens axial, mais mobile en rotation, à l'arbre d'entraînement et, respectivement, à l'arbre de sortie,
f) les dispositifs de pression (9) comportent chacun des premiers éléments (10) liés en rotation aux demi-poulies à mouvement axial (6 et, respectivement, 8) et des seconds éléments (11 et, respectivement, 11′, 11˝) qui coopèrent en produisant une force axiale et qui, pour leur part, sont liés en rotation à l'arbre d'entraînement et, respectivement, à l'arbre de sortie,
g) le dispositif à ressort précontraint (15), au nombre d'au moins un, est associé à la poulie à courroie trapézoïdale (2) située côté entraînement.

2. Variateur de vitesse à courroie trapézoïdale selon la revendication 1, caractérisé en ce que les seconds éléments des dispositifs de pression (9) comportent chacun un agencement de chevilles (11 ; 11′, 11˝) qui est orienté radialement et lié en rotation à l'arbre d'entraînement et, respectivement, à l'arbre de sortie et qui est en contact linéaire, en transmettant le couple de rotation, avec l'agencement formant rampe correspondant (10) qui sert de premier élément, qui agit axialement et qui est porté par la demi-poulie à mouvement axial (6, 8).

3. Variateur de vitesse à courroie trapézoïdale selon la revendication 2, caractérisé en ce que les agencements formant rampes (10) sont disposés dans ou contre des prolongements axiaux liés en rotation et formant manchons (20) des demi-poulies à mouvement axial respectives (6, 8).

4. Variateur de vitesse à courroie trapézoïdale selon la revendication 2 ou 3, caractérisé en ce que les agencements de chevilles (11 ; 11′, 11˝) sont munis de douilles d'ajustage (21) qui diminuent la friction et qui roulent sur des glissières de guidage des agencements formant rampes (10).

5. Variateur de vitesse à courroie trapézoïdale selon l'une des revendications 1 à 4, caractérisé en ce que l'extrémité libre du prolongement axial formant manchon (18) de la demi-poulie fixe (5) située côté entraînement porte une collerette périphérique (22) qui est immobilisée axialement et sert de plaque d'appui et sur laquelle agissent, d'une part, le dispositif à ressort (15) et, d'autre part, le dispositif à force centrifuge (12).

6. Variateur de vitesse à courroie trapézoïdale selon la revendication 5, caractérisé par plusieurs, de préférence trois, dispositifs à ressort (15) qui sont répartis à intervalles réguliers à la périphérie du prolongement formant douille (18) et qui sont montés chacun sur un axe de guidage (28) qui, à l'une de ses extrémités, est fixé à la demi-poulie à mouvement axial (6) et, à son autre extrémité, traverse avec jeu la collerette périphérique (22).

7. Variateur de vitesse à courroie trapézoïdale selon la revendication 6, caractérisé en ce que les extrémités libres des axes de guidage (28) portent un dispositif de retenue (23) qui sert de support au dispositif à force centrifuge (12).

8. Variateur de vitesse à courroie trapézoïdale selon la revendication 7, caractérisé en ce que le dispositif à force centrifuge (12) comprend plusieurs, de préférence trois leviers (13) à deux bras qui sont répartis à intervalles réguliers à la périphérie de la collerette périphérique (22), qui sont chacun montés pivotants autour d'un axe d'appui (14) disposé dans le dispositif de retenue (23) et orienté sensiblement dans le sens circonférentiel, et dont l'un des bras de levier est appliqué contre la collerette périphérique (22) tandis que leur autre bras de levier porte une masselotte (24) ou est lui-même conçu en forme de masselotte.

9. Variateur de vitesse à courroie trapézoïdale selon l'une des revendications 1 à 8, caractérisé en ce que les agencements formant rampes à effet axial (10) des dispositifs de pression (9) présentent chacun une pente variable sur la longueur de la rampe ou au moins sensiblement constante.

10. Variateur de vitesse à courroie trapézoïdale selon l'une des revendication 1 à 9, caractérisé en ce que les dispositifs à ressort (15) présentent un taux d'élasticité sensiblement linéaire ou à augmentation progressive.
